Europäisches Patentamt

European Patent Office

Office européen des brevets

(11) Veröffentlichungsnummer: **0 107 786**
A2

(12) **EUROPÄISCHE PATENTANMELDUNG**

(21) Anmeldenummer: 83109488.3

(22) Anmeldetag: 23.09.83

(51) Int. Cl.³: **B 60 K 41/22**

(30) Priorität: 28.10.82 DE 3239927

(43) Veröffentlichungstag der Anmeldung:
09.05.84 Patentblatt 84/19

(84) Benannte Vertragsstaaten:
DE FR GB IT NL SE

(71) Anmelder: Dr.Ing.h.c. F. Porsche Aktiengesellschaft
Porschestrasse 42
D-7000 Stuttgart 40(DE)

(72) Erfinder: Lehmann, Ulrich
Theodor-Heuss-Strasse 41
D-7251 Weissach(DE)

(54) Einrichtung zum Steuern einer Folgebetätigung für eine Doppelkupplung.

(57) Bei einem Doppelkupplungsgetriebe, insbesondere für
ein Kraftfahrzeug, ist es zum einwandfreien Schaltungsablauf erforderlich, die Kupplungen im Wechsel zu Schließen
und zu Öffnen. Damit ein solcher Ablauf gewährleistet ist,
sind Differenzdruckschalter vorgesehen, die eine Signaleinrichtung umfassen, welche Endpositionen der Kupplungen
einer elektronischen Steuerungseinrichtung zur Auswertung
anzeigen.

EP 0 107 786 A2

Fig.1

Einrichtung zum Steuern
einer Folgebetätigung für
eine Doppelkupplung

Die Erfindung bezieht sich auf eine Einrichtung zum Steuern
einer Folgebetätigung nach dem Oberbegriff des Anspruchs 1.

Bei einem mit einer Doppelkupplung ausgeführten halbautomatischen Wechselgetriebe mit Gangvorwahl ist zur exakten
Funktion des Schaltungsablaufes eine die Stellung der Kupplungen anzeigende Einrichtung erforderlich, um die Lage der
Kupplungen vor und nach jedem Schaltvorgang festzustellen,
damit nachfolgende Schaltvorgänge eingeleitet werden können.

Aufgabe der Erfindung ist es, einen Differenzdruckschalter
der eingangs genannten Art zu schaffen, der einen Rückschluß auf die Stellungen der Kupplungen im Betrieb zuläßt.

Diese Aufgabe wird erfindungsgemäß durch die Merkmale des
Anspruchs 1 gelöst. Weitere vorteilhafte Merkmale beinhalten
die Unteransprüche.

Die mit der Erfindung hauptsächlich erzielten Vorteile sind
darin zu sehen, daß durch die Anzeige der Endpositionen der
beiden Kupplungen über das vom Schaltkolben beeinflussbare
Meßglied, eine gute Funktion des Kupplungssystems und daraus resultierend ein einwandfreier Schaltungsablauf sichergestellt ist. Die Ausgestaltung des Differenzdruckschalters
erfolgt mit einem berührungslos arbeitenden Sensor, wie z.B.
einem Feldplatten-Differential-Fühler, der nach berührungsfreier Annäherung eines bei erhöhtem Druck verschiebbarem
Schaltkolbens ein Ausgangssignal zum Erkennen der Kupplungsstellungen erzeugt. Dieses Meßglied ist verschleißfrei und

weitgehend temperaturunabhängig, so daß eine große Betriebssicherheit bei einer beachtlichen Standzeit gewährleistet ist.

Eine sofortige Signalabgabe ergibt sich im weiteren dadurch,
daß der Schaltkolben bei einer Druckdifferenz zwischen
seinen beiden Kammern bis zum Meßglied nur um einen kleinen
Hub verschoben werden muß.

In weiterer Ausgestaltung der Erfindung sind die Stirnflächen
der Kolben den gegebenen Druckverhältnissen angepaßt, das
heißt, die Flächen weisen nicht in jedem Fall eine gleiche
Größe auf.

Durch das Zusammenwirken vom Meßglied der Signaleinrichtung
und dem Schaltkolben bei geringster Kolbenbewegung läßt sich
der bei Doppelkupplungsgetrieben erforderliche genau abgestimmte Kupplungswechsel verwirklichen, ohne daß es zu einem
den Gangwechsel behindernden Überschneiden der Kupplungsbetätigung kommt.

In der Zeichnung werden Ausführungsbeispiels der Erfindung
gezeigt, die nachstehend näher beschrieben werden.
Es zeigen
Fig. 1    eine Schnittdarstellung eines aus zwei Einheiten
         bestehendes Differenzdruckschalters mit seinen Verbindungsleitungen zur Doppelkupplung,
Fig. 2    eine weitere Ausführung einer Einheit eines Dif-
         ferenzdruckschalters mit unterschiedlichen Druck-
         flächen und
Fig. 3    ein Diagramm über den Druckverlauf während des
         Kupplungswechsels.

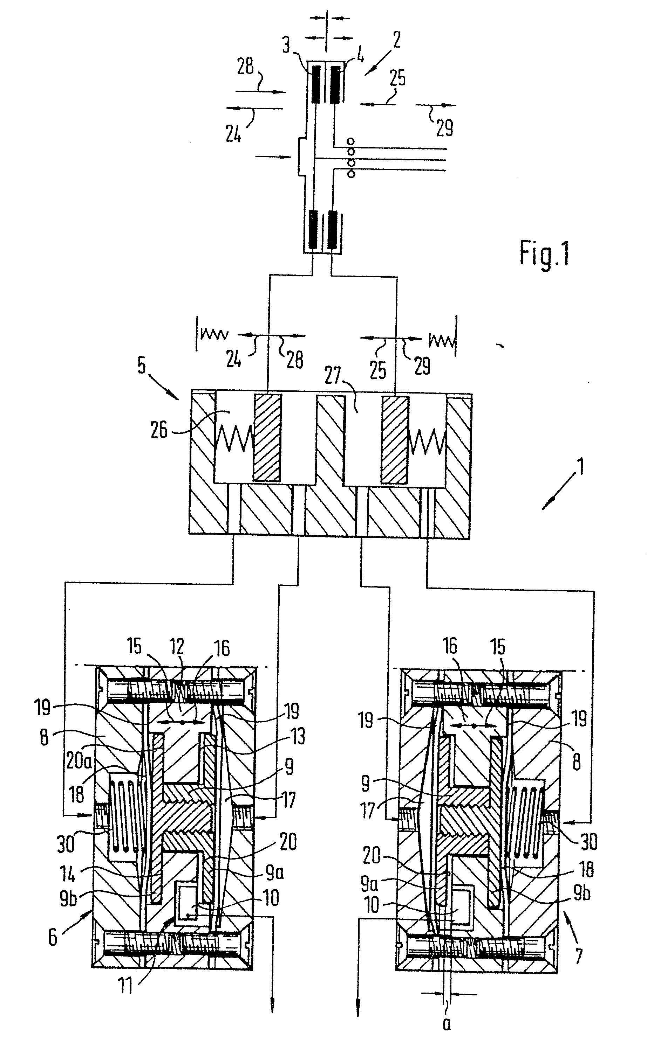

Fig. 1 zeigt ein Signalsystems 1 für eine Doppelkupplung 2
eines automatischen Kraftfahrzeug-Wechselgetriebes. In dieser

Darstellung sind nur die wesentlichen Teile und Verknüpfungen gezeigt und zwar die Doppelkupplung 2 bestehend aus zwei Kupplungen 3 und 4, ein schematisch dargestelltes hydraulisches Drucksystem 5 und zwei zu einer Einheit zusammengefaßte Differenzdruckschalter 6 und 7. Ein Steuerelektroniksystem zum Auswerten der vom Differenzdruckschalter ausgehenden Signale sowie mit dem System verbundene Umschaltventile sind nicht näher dargestellt.

Das Schalten bei einem Kraftfahrzeug-Wechselgetriebe mit einer Doppelkupplung 2 erfolgt über eine elektronische Gangwahl, so daß kein Schalten über einen herkömmlichen Schalthebel erfolgt. Die Kupplungen 3 und 4 arbeiten automatisch in der Weise, daß zum Schalten der Gänge die Kupplungen 3, 4 wechselweise schließen, d.h., zum Schalten eines ersten Ganges wird z.B. die Kupplung 3 geschlossen, wogegen die Kupplung 4 dann geöffnet ist. Zum Schalten eines zweiten Ganges erfolgt dann ein Kupplungswechsel derart, daß die Kupplung 4 schließt und die Kupplung 3 öffnet.

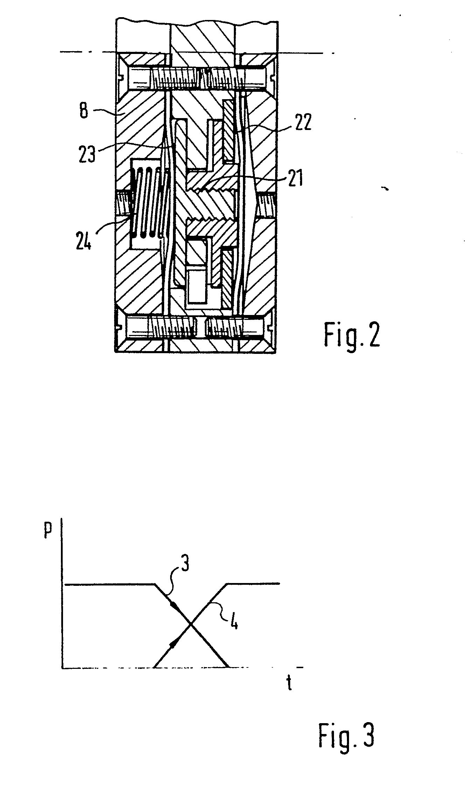

Im Druckdiagramm (Fig. 3) ist die Arbeitsweise der beiden Kupplungen 3 und 4 über die Zeit dargestellt. Während z.B. der Druck an der Kupplung 3 abfällt und diese öffnet, steigt gleichzeitig der Druck an der Kupplung 4 an und schließt diese. Dieser Vorgang wiederholt sich in Abhängigkeit von der Motordrehzahl.

Damit diese Folgebetätigung der beiden Kupplungen 3 und 4 exakt aufeinander abgestimmt ist, sind in den Hydraulikkreislauf der Kupplungen 3 und 4 Differenzdruckschalter 6 und 7 zwischengeschaltet. Diese erzeugen bei einer Endstellung, d.h. bei einer geschlossenen Stellung der Kupplung ein Signal, das von dem Steuerelektroniksystem in der Weise ausge-

wertet wird, daß die vorbestimmten Positionen der Kupplungen 3 und 4 eingenommen sind. Von dem Steuerelektroniksystem wird das Ausgangssignal den der Kupplungen vorgeschalteten Umschaltventilen zugeleitet, die dann einen
Kupplungswechsel einleiten.

Jeder Kupplung 3 und 4 ist ein Differenzdruckschalter zugeordnet. Der Kupplung 3 ist der Schalter 6 und der Kupplung 4
ist der Schalter 7 zugeordnet. Diese sind vorzugsweise in
einem Gehäuse 8 zu einer kompakten Einheit zusammengefaßt.
In Fig. 1 ist die Einheit aus Gründen der Übersichtlichkeit
aufgeteilt, wobei die Trennungslinie strichpunktiert dargestellt worden ist.

Die Differenzdruckschalter 6 und 7 umfassen im Gehäuse 8
jeweils einen Schaltkolben 9 und eine ein Meßglied 10 aufweisende Signaleinrichtung 11. Der Schaltkolben 9 ist in
einem Gehäusekern 12 geführt, der gleichzeitig Anschläge 13
und 14 für die Axialbewegungen in den Pfeilrichtungen 15 und
16 bildet. In dem Gehäuse 8 sind jeweils zwei Druckkammern 17
und 18 angeordnet, die über den Schaltkolben 9 miteinander
druckabhängig verbunden sind. Ein dichter Abschluß zum
Kolben 9 erfolgt jeweils über eine elastische Membrane 19
aus Gummi, Metall oder einem anderen elastischen Material.
Jeder Schaltkolben 9 ist mit einem zum Kolbenkern hin abgestuften Kopf 9a und 9b versehen, wobei der Kopf 9a eine innere
Ringfläche 20 aufweist, die dem Meßglied 10 beeinflußbar
gegenübersteht. Das Meßglied 10 wird z.B. aus einem Feldplatten-Differential-Fühler gebildet, der aus zwei nebeneinander angeordneten Feldplatten besteht, die als Brückenschaltung elektronisch ausgebildet sind.

Bei der Ausführung nach Fig. 1 weisen die Schaltkolben 9 endseitig jeweils einen Kopf 9a, 9b mit einer gleichgroßen Stirnfläche auf, die dem Druckraum 17, 18 zugerichtet sind. Die weitere Ausführungsform nach Fig. 2 weist Schaltkolben 21 auf, die entsprechend den herrschenden Druckverhältnissen mit unterschiedlich großen Stirnflächen 22 und 23 versehen sind.

Im drucklosen Zustand nimmt der Schaltkolben 9 über ein Federelement 30, die in Fig. 1 gezeigte Stellung ein. Die Ringfläche 20 des Kopfes 9a steht dem Meßglied 10 im Abstand a gegenüber. Die weitere Ringfläche 20a des gegenüberliegenden Kopfes 9b liegt dagegen am Gehäusekern 12 an. Beim Schließen der Kupplung 3 in Pfeilrichtung 24 wird gleichzeitig die Kupplung 4 in Pfeilrichtung 25 geöffnet. Über das dem Hydraulikkreislauf der Kupplungen angeschlossenem Drucksystem 5 wird über den Druckraum 26 des Schaltkolbens 9 die Kammer 18 des Differenzdruckschalters 6 mit Druck beaufschlagt und nimmt die in Fig. 1 dargestellte Position ein.

Gleichzeitig wird über den Druckraum 27 des Drucksystems 5 der weitere Kolben 9 im Differenzdruckschalter 7 beaufschlagt. Der Kolben 7 verschiebt sich in Pfeilrichtung 15 um einen Betrag von $< 0,5$ mm und seine Ringfläche 20 deckt eine Feldplatte des Meßgliedes 10 ab, wodurch eine max. Verstimmung des Gliedes und eine Signalabgabe erreicht wird. Diese Signalabgabe erfolgt vorzugsweise berührungslos zum Meßglied 10 und ist somit im wesentlichen verschleißfrei.

Bei einem weiteren Schaltvorgang wird die Kupplung 3 in Pfeilrichtung 28 geöffnet und im Wechsel wird die Kupplung 4 in Pfeilrichtung 29 geschlossen. Die Endposition der ge-

öffneten Kupplung wird jeweils durch ein Signal gemeldet
und von der Schaltungselektronik der Kupplungssteuerung
registriert, die nicht näher dargestellt ist. Eine Anzeige
der Positionen bei geschlossener Kupplung über das Meßglied 10 ist ebenfalls möglich.

Patentansprüche

1. Einrichtung zum Steuern einer Folgebetätigung für eine hydraulisch betätigte Doppelkupplung eines lastschaltbaren Kraftfahrzeug-Wechselgetriebes, dadurch gekennzeichnet, daß zur Erzielung der Folgebetätigung der Kupplungen (3, 4) für die Schaltung eines der jeweiligen Kupplung (3, 4) zugeordneten Ganges ein Differenzdruckschalter (6, 7) vorgesehen ist, der einen vom Steuerdruck der Kupplungen (3, 4) beaufschlagten Schaltkolben (9) umfaßt, wobei in Abhängigkeit einer Endstellung der Kupplung (3 oder 4) der Schaltkolben (9) ein Meßglied (10) einer Signaleinrichtung (11) beeinflußt.

2. Einrichtung nach Anspruche 1, dadurch gekennzeichnet, daß jeder Kupplung (3, 4) ein Differenzdruckschalter (6, 7) zugeordnet ist, der jeweils zwei über einen axial bewegbaren Schaltkolben (9) verbundene Druckkammern (17, 18) umfaßt, die jeweils mit dem hydraulischen Steuerkreis der Kupplungen (3, 4) in Verbindung stehen.

3. Einrichtung nach den Ansprüchen 1 oder 2, dadurch gekennzeichnet, daß jede Druckkammer (17, 18) der Differenzdruckschalter (3, 4) zum Schaltkolben (9) hin über eine elastische, Druck übertragende Membrane (19) abgedichtet ist.

4. Einrichtung nach Anspruch 3, dadurch gekennzeichnet, daß die Membrane (19) aus Gummi besteht.

5. Einrichtung nach den Ansprüchen 1 oder 2, dadurch gekennzeichnet, daß der Schaltkolben (9) endseitig jeweils einen Kopf (9a, 9b) aufweist und zumindest der eine Kopf (9a) mit einer inneren Ringfläche (20) versehen ist, die dem Messglied (10) bei geöffneter Stellung der Kupplung (3, 4) im Abstand (a) und bei geschlossener Stellung der Kupplung (3, 4) zur Signalabgabe angenähert aber berührungsfrei gegenübersteht.

6. Einrichtung nach Anspruch 5, dadurch gekennzeichnet, daß die innere Ringfläche (20) des einen Kopfes (9a) des Schaltkolbens (9) im drucklosen Zustand über ein Federelement (30) in einer Stellung im Abstand (a) zum Meßglied (10) steht und die weitere innere Ringfläche (20a) des anderen Kopfes (9b) des Schaltkolbens (9) am Gehäusekern (12) anliegt.

7. Einrichtung nach den Ansprüchen 5 oder 6, dadurch gekennzeichnet, daß der Abstand (a) zwischen dem Meßglied (10) der Signaleinrichtung (11) und der inneren Ringfläche (20) des Kopfes (9a) $< 0,5$ mm ist.

8. Einrichtung nach einem oder mehreren der vorhergehenden Ansprüche, dadurch gekennzeichnet, daß das Meßglied (10) ein Feldplatten-Differential-Fühler ist.

9. Einrichtung nach einem oder mehreren der vorhergehenden Ansprüche, dadurch gekennzeichnet, daß die druckbeaufschlagten Stirnflächen des Schaltkolbens (9) jeweils gleich und/oder unterschiedlich groß ausgeführt sind.

0107786

1/2

Fig.1

8

23

24

22

21

Fig. 2

Fig. 3